# EUROPEAN PATENT APPLICATION

(11) **EP 3 467 562 A1**
(43) Date of publication of application: **10.04.2019**
(21) Application number: 17194618.9
(22) Date of filing: 03.10.2017
(51) Int. Cl.: G02B 7/02, F16F 1/02, G02B 7/04

(54) **MICRO SUSPENSION DEVICE AND SPRING FOR A MICRO SUSPENSION DEVICE**

(71) Applicant: miniswys SA, 2503 Biel (CH)
(72) Inventor: Hösli, Raphaël Yann, 2560 Nidau (CH)
(74) Representative: Frei Patent Attorneys

(57) **Abstract**

A micro suspension device comprises a base (61) and a carrier (62) that is designed to move relative to the base (61) along a reference axis (64). The carrier (62) is suspended and guided relative to the base (61) by a spring arrangement (1), with
• the spring arrangement (1) comprising two spring units (21, 22),
• each spring unit (21, 22) comprising two arms (31, 32),
• each arm (31, 32) comprising two sections (41, 42) and a connection node (43),
∘ the first section (41) extending from a first attachment node (51), attached to the base (61), to the connection node (43),
∘ the second section (42) extending from the connection node (43) to a second attachment node (52) attached to the carrier (62),

• wherein in each spring unit (21, 22),
∘ the arms (32, 33) are connected at their connection nodes (43),
∘ are mirror-symmetric to one another, and
∘ are angled relative to one another.

## Description

The invention relates to the field of micro positioning devices and in particular to a micro suspension device and a spring for a micro suspension device as described in the preamble of the corresponding independent claims.

US 2011/150442 A1 discloses a focusing and image stabilising device in which a lens barrel is suspended by springs, the springs allowing for movement of the lens barrel along the optical axis, and for tilting of the barrel relative to the axis. Actuating forces are generated by coils arranged symmetrically around the circumference of the lens barrel.

US 2017/0052386 A1 discloses a positioning device for an image stabiliser as part of a miniature camera. Actuators used therein are driven by piezoelectric elements. Forces exerted by the actuators act on the lens barrel in an asymmetric fashion. The exact alignment of the lens barrel is achieved with parallelogram mechanisms.

In certain applications it is desirable to have the lens barrel move only along the optical axis and to keep any tilting of lens barrel to a minimum. Known mechanisms for suspending a carrier such as a lens barrel relative to a base body are either complex or do not provide sufficient stability against tilting of the lens barrel. This is especially the case when the resulting actuation force is not collinear with the optical axis of the lens barrel.

It is therefore an object of the invention to create a micro suspension device and a spring for a micro suspension device of the type mentioned initially, which overcomes the disadvantages mentioned above.

These objects are achieved by a micro suspension device and a spring for a micro suspension device according to the claims.

The micro suspension device comprises a base and a carrier that is designed to move relative to the base along a reference axis. Therein, the carrier is suspended and guided relative to the base by a spring arrangement,
∘ the spring arrangement comprising at least a first spring unit and a second spring unit,
∘ each spring unit comprising a first arm and a second arm,
∘ each arm comprising a first section, a second section, and a connection node,
   ∘ the first section extending from a first (or base) attachment node, at which the first section is attached to the base, to the connection node,
   ∘ the second section extending from the connection node to a second (or carrier) attachment node at which the second section is attached to the carrier,
   ∘ wherein the first (or base) attachment node and the second (or carrier) attachment node lie at the same circumferential position on the base and carrier, respectively. In other words, seen in a projection on the reference plane and from a centre point of the carrier, the first (or base) attachment node and second (or carrier) attachment node lie at the same angle.
∘ wherein in each spring unit,
   ∘ the connection node of the first arm is connected to the connection node of the second arm,
   ∘ the first arm and second arm are mirror-symmetric to one another, and
   ∘ the first arm and second arm are angled relative to one another.

The first arm and second arm being angled to one another means that they do not lie on a straight line. In other words, considering a tangent line that passes through the common connection node of the two arms and is parallel to a line connecting the first (or base) attachment nodes of the two arms and/or is parallel to a line connecting the second (or carrier) attachment nodes of the two arms, then the attachment nodes of the two arms all are on the same side of this tangent line. If the arms are not in a planar configuration, the same holds, with a tangent plane instead of the tangent line, the tangent plane further being parallel to the reference axis (or, equivalently, normal to the reference plane).

In other words, seen in a projection along the reference axis, the connection nodes are distanced from a straight line connecting the attachment nodes (or a midpoint between these nodes) of the first arm with the respective attachment nodes (or a midpoint between these nodes) of the second arm.

Because the connection nodes of the arms of a spring unit are connected, relative movement of each pair of first and second attachment nodes is constrained much more than it would be if the spring units were not connected, which would allow the arms to tilt independently and would allow corresponding attachment nodes (nominally at the same circumferential position) to move relative to one another in the circumferential direction. Relative movement of each pair of attachment nodes is essentially constrained to directions parallel to the reference axis. Consequently, a low value of tilt is attained per unit of movement along the reference axis.

Because the connection nodes are distanced from a straight line connecting the attachment nodes of the two arms, it becomes possible that, when in each arm the attachment nodes move away from each other in the direction along the reference axis, the connected connection nodes can flex in the direction of this straight line.

This makes it possible for the attachment nodes to move without significantly elongating the sections of the arms or breaking the connection of the connection nodes.

Typically, the first section and second section run parallel to one another, that is, at a constant distance from one another.

The suspension device can be a lens suspension and positioning device, to be used in a miniature camera. In this case, the lens is arranged in the carrier.

In embodiments, the first arm and second arm are mirror-symmetric to one another, with respect to a mirror plane comprising the connection node and the reference axis. The mirror plane can comprise the reference axis.

The reference axis is an axis of symmetry of the carrier, provided that the carrier is in a nominal orientation. If the carrier carries an optical element, its axis of symmetry of the carrier can be coincident with the optical axis of this optical element.

The reference axis is normal to a reference plane. The nominal movement of the carrier is along the reference axis, e.g. for focusing an optical system. Tilting the carrier causes its axis of symmetry to deviate from the reference axis.

The mirror symmetry means that sections of the first arm can extend, from the connection node, in a direction opposite to a direction in which the sections of the second arm extend from the connection node.

As a result, if the attachment nodes of the first arm lie at a first central angle, and the attachment nodes of the second arm lie at a second central angle, then the connection node connecting the two arms lies at an angle between these two central angles, typically in the middle, on their bisecting angle or line.

In embodiments, when the carrier is moved relative to the base in the direction of the reference axis, a distance between the connection nodes of the spring units and the reference axis changes according to this relative movement.

In embodiments, the arms form sections of a circle centred on the reference axis.

In embodiments, the sections of the first arm are parallel to a first side of a triangle, the sections of the second arm are parallel to a second side of the triangle, and a first line connecting the first (or base) attachment nodes of the first arm and the second arm and a second line connecting the second (or carrier) attachment nodes of the first arm and the second arm are parallel to a third side of the triangle.

The triangle defined in this manner is defined with respect to its orientation and the angles of its sides, but not to its absolute size. Typically, it is an isoceles triangle, with the first and second sides being of the same length.

In embodiments, the first spring unit and the second spring unit have congruent shapes and are arranged in a mirror symmetric arrangement.

The plane of symmetry typically comprises the reference axis.

In embodiments, the first (or base) attachment node of the second arm of the first spring unit coincides with or is identical to the first (or base) attachment node of the first arm of the second spring unit, and
the second (or carrier) attachment node of the second arm of the first spring unit coincides with or is identical to the second (or carrier) attachment node of the first arm of the second spring unit.

Attachment nodes coinciding means that the two attachment nodes are attached to the carrier or base, respectively, at the same location. The attachment nodes being identical means that they are the same physical element. In other words, such an attachment node is shared by two arms of adjacent spring units.

In embodiments, the micro suspension device comprises exactly two spring units which together extend around at least a third of the circumference of the carrier, in particular around half the circumference.

Generally, the positions of nodes can be represented by a circumferential position, expressed by a central angle *θ* (theta) relative to a point of reference on the circumference. This angle is measured in a projection on the reference plane, described by an angle seen from a centre point, where the reference axis intersects the reference plane.

The angle from an outer pair of nodes, comprising a first (or base) attachment node and a second (or carrier) attachment node to an inner pair of such nodes is the same for the two spring units.

Furthermore, in each spring unit the angle of the connection node bisects the angle between the outer and inner pair of nodes.

In embodiments, the micro suspension device comprises exactly four spring units. They can together extend around the entire circumference of the carrier.

In embodiments, the micro suspension device comprises exactly three spring units. They can together extend around half, three quarters or the entire circumference of the carrier.

For each of the spring units, the central angle or the arc spanned by the unit, that is, the angle or the arc
- from a first pair of nodes, comprising a first (or base) attachment node and a second (or carrier) attachment node (that is, the attachment nodes of one arm)
- to a second pair of such nodes (that is, the attachment nodes of the other arm)
   typically is the same.

In each of the above configurations with two or three or four spring units, adjacent spring units can have first and/or second attachment nodes coinciding with or identical to respective first and/or second attachment nodes of the adjacent spring unit.

Alternatively, the spring units can have first and/or second attachment nodes that are separate from those of an adjacent spring unit.

In embodiments, there exists a planar configuration of the spring arrangement in which the arms lie in a plane.

This plane is typically parallel to the reference plane. The spring arrangement can be in the planar configuration at a particular position of the carrier relative to the base.

In embodiments, the spring arrangement is manufactured from a single piece of a flat material (a sheet of material), in particular metal, by a subtractive process, such as cutting or stamping or etching.

The spring arrangement is thus made of a single part, constituting at least two spring units, each with two arms, each with two sections.

In embodiments, the spring arrangement is manufactured from wires.

For connecting the wires at the connection nodes, the wires can be welded or soldered together.

In embodiments, a shape of the spring arrangement in which it has minimal potential energy is not a flat configuration.

In such a pre-tensioned spring, when the spring arrangement is brought into a flat or a planar configuration, in which all sections of all arms lie in the same plane, it is pre-tensioned, that is, it stores potential energy in elastic sections of the arms.

Such a pre-tension can be used to reduce a force for moving carrier from a position in which the spring arrangement is in the planar configuration into another configuration. During such a movement, energy stored in a first set of elastic sections of the arms is released, and energy is stored in a second set of elastic sections. Such sections can physically overlap. For example, a part can bent and twisted at the same location, and energy can be transferred by straightening the part in one dimension and twisting it in another one.

In embodiments, the micro suspension device comprises an actuator arranged to exert a force acting on the carrier in a direction parallel to the reference axis, wherein this force acts on the carrier at a point that is distanced from the reference axis.

In other words, this force (which can be represented as a force vector) does not coincide with the reference axis. The actuator is configured to move the carrier along the reference axis. But it is arranged such that its force acts asymmetrically on the carrier, typically at a point at the periphery or circumference of the carrier. The force thus gives rise to a torque that induces the carrier to tilt. Tilting is minimised grace to the spring arrangement. The micro suspension device together with the actuator constitutes a micro positioning device.

The spring arrangement is for use in a micro suspension device, the spring arrangement being designed to be connected to a base and a carrier for moving the carrier relative to the base along a reference axis, and for suspending and guiding the carrier relative to the base. Therein,
∘ the spring arrangement comprises at least a first spring unit and a second spring unit,
∘ each spring unit comprises a first arm and a second arm,
∘ each arm comprises a first section, a second section, and a connection node,
   ∘ the first section extending from a first (or base) attachment node (at which the first section can be attached to the base), to the connection node,
   ∘ the second section extending from the connection node to a second (or carrier) attachment node (at which the second section can be attached to the carrier),
   ∘ wherein the first (or base) attachment node and the second (or carrier) attachment node are adjacent to one another
∘ wherein in each spring unit,
   ∘ the connection node of the first arm is connected to the connection node of the second arm,
   ∘ the first arm and second arm are mirror-symmetric to one another, and
   ∘ the connection nodes are distanced from a straight line connecting the attachment nodes of the first arm with the attachment nodes of the second arm.

A base and carrier node being adjacent to each other can mean that they are located at least approximately at the same central angle. They thus are arranged to be attached to points at the same circumferential position on the base and carrier.

In embodiments, the spring arrangement is manufactured from a single piece of a flat material, comprising two spring units in a mirror-symmetric arrangement, or comprising four spring units in an arrangement with fourfold rotational symmetry.

Further embodiments are evident from the dependent patent claims.

The subject matter of the invention will be explained in more detail in the following text with reference to exemplary embodiments which are illustrated in the attached drawings, which schematically show:
- Figure 1: a spring arrangement with curved arms;
- Figure 2: a spring arrangement combined with a carrier and a base;
- Figure 3: a micro suspension device with spring arrangements with two spring units spanning half of the circumference of a carrier, in a planar position;
- Figure 4: a micro suspension device with spring arrangements with four spring units spanning the entire circumference of a carrier, in a planar position;
- Figure 5: a spring arrangement with straight arms;
- Figure 6: a spring arrangement designed to be wrapped around a carrier;
- Figure 7: a micro suspension or positioning device with spring arrangements in an extended position; and
- Figure 8: the same, but with connection nodes being free to move, in order to provide a better understanding of the invention.

In principle, identical parts are provided with the same reference symbols in the figures.

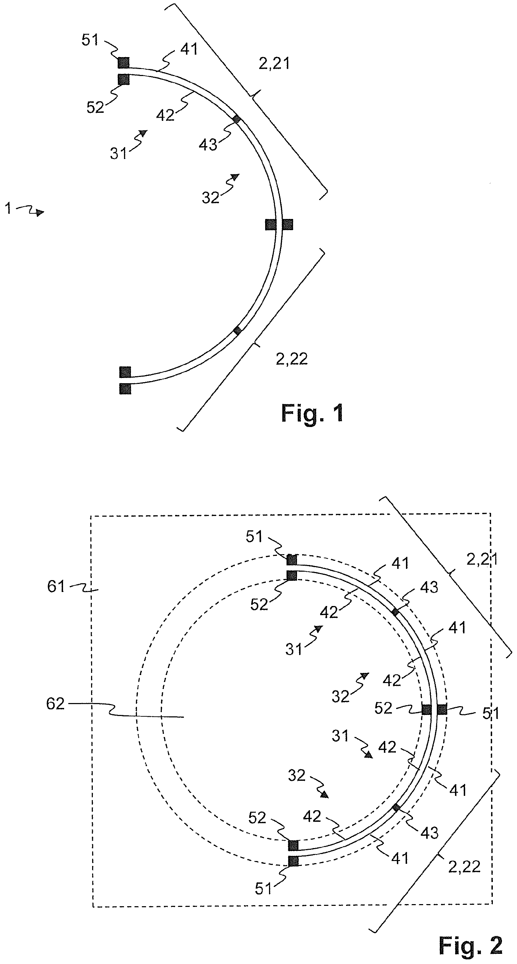

**Figure 1** shows a spring arrangement 1 with curved arms, and **Figure** 2 the same but combined with a carrier and a base. the spring arrangement 1 comprises two spring units 2, a first spring unit 21 and a second spring unit 22. The spring units 2 are mirror images of each other. Each of the spring units 2 comprises a first arm 31 and a second arm 32. The arms 31, 32 are mirror images of each other. Each arm 31, 32 in turn comprises a first section 41 which extends from a first (or base) attachment node 51 to a connection node 43, and a second section 42 which extends, in parallel to the first section 41, from the connection node 43 to a second (or carrier) attachment node 52. At the first and second attachment nodes 51, 52 the spring arrangement 1 is attached to the carrier 62 and the base 61, respectively. The elements of the spring arrangement 1 lie in a plane, also called reference plane 63, in this case the plane of the drawing. The spring arrangement 1 allows the carrier 62 to move in the direction of a reference axis 64 which is normal to the reference plane 63.

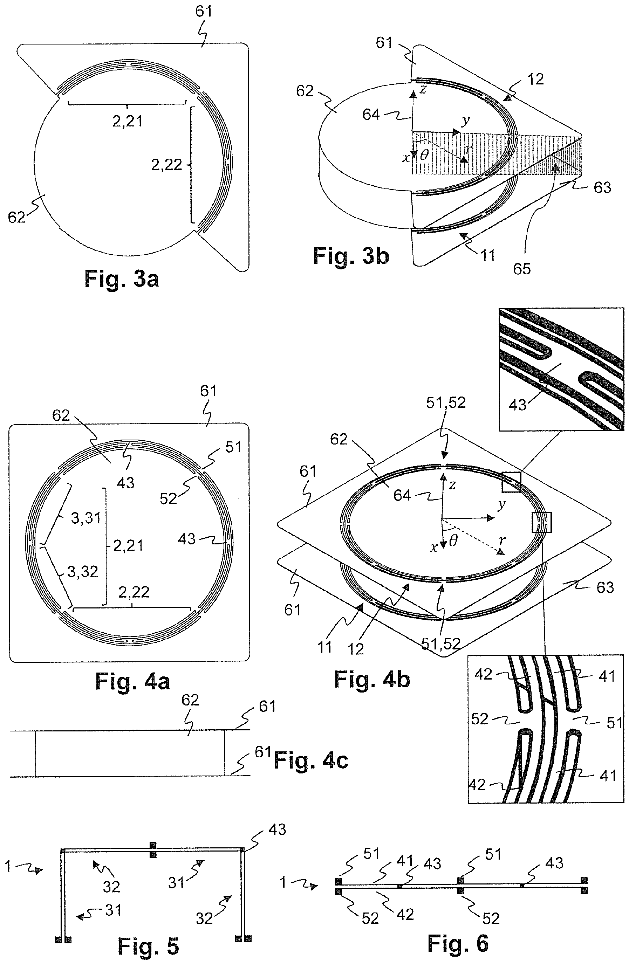

**Figure 3** shows a micro suspension device with spring arrangements 11, 12 with two spring units spanning half of the circumference of a carrier, in a planar position. **Figure 3a** shows an elevated and **Figure 3b** a perspective view. A lateral view is identical to that of **Figure 4c****.** A first (or lower) spring arrangement 11 and a second (or upper) spring arrangement 12 are shown, connected to a lower or upper part of the base 61 and carrier 62, respectively, and acting in parallel. In principle, just one spring arrangement 1 could be sufficient to support and guide the carrier 62.

The geometry of the spring arrangements 11, 12 is essentially the same as in Figures 1 and 2, the main difference being that the spring arrangements 11, 12 are shown in more detail, being cut or stamped from a piece of sheet material, typically metal. A base 61 and carrier 62 are shown as part of the same sheet, in reality they can be other objects constituting the base 61 and, for example, a lens barrel, to which the spring arrangement 1 is attached. The reference plane 63 is parallel to the planes that are drawn to represent the base 61. The reference axis 64 is normal to this and is designated as z-Axis. The reference axis 64 passes through the centre of the carrier 62 and typically is an axis of symmetry of the carrier 62 and/or the spring arrangement 1.

An angular position of a point on the spring arrangement 1 or a point near the circumference of the carrier 62 can be defined as an angle *θ* (theta) seen from the centre of the carrier 62, between a fixed reference vector x in the reference plane 63, and a radial vector from the centre to said point.

A actuator plane 65 shows a plane, normal to the reference plane 63 and comprising the reference axis 64, in which forces or a force vector from an actuator (not shown) can act between the base 61 and the carrier 62. If such a force acts near the periphery of the carrier 62 it gives rise to a torque that induces the carrier 62 to tilt. In the present example, the actuator plane 65 forms a plane of symmetry for the spring arrangement 1. With the actuator 66 force acting in this plane, on the same side of the carrier 62 at which the spring arrangement 1 is arranged, the tilting of the carrier 62 will be comparatively small, compared to other placements of the actuator 66.

**Figure 4** shows a micro suspension device with spring arrangements with four spring units 2 spanning the entire circumference of a carrier, in a planar position. **Figure 4a** shows an elevated, **Figure 4b** a perspective, and **Figure 4c** a lateral view. Again, a first (or lower) spring arrangement 11 and second (or upper) spring arrangement 12 are shown. Each spring arrangement 11, 12 comprises the same kind of spring units 2 as Figure 3. This arrangement is well suited for a force acting symmetrically on the carrier 62, providing for good stability with regard to tilting by disturbances.

The magnified views shown in **Figure 4b** illustrate a connection node 43 and attachment nodes 51, 52 linking the spring arrangement 1 to the base 61 and carrier 62. The attachment nodes 51, 52 are shown in a simplified manner, as if the spring arrangement 1 and base 61 or carrier 62 were the same part. In reality, the attachment nodes 51, 52 can comprise any kind of form or material or force fit, e.g. gluing, welding, a hook on a peg, etc. The magnified views pertain to the embodiment of **Figure 3** as well.

**Figure 5** shows a spring arrangement 1 with straight arms. The general properties of the spring arrangement 1 of the previous figures can be implemented here as well, the difference lying essentially in the geometry of the arms 31, 32. In particular, the spring arrangement 1 can be manufactured from a flat piece of sheet material, extending in the plane of the image.

In the embodiments shown so far, the attachment nodes 51, 52 are designed to move, when the carrier 62 moves relative to the base 61, in directions that are normal to the plane of the image in Figures 1, 2 and 5.

**Figure 6** shows a spring arrangement 1 designed to be wrapped around a carrier. The general properties of the spring arrangement 1 of the previous figures can be implemented here as well. In particular, the spring arrangement 1 can be manufactured from a flat piece of sheet material, extending in the plane of the image. However, in contrast to the other embodiments, the plane in which this spring arrangement 1 lies is designed to be bent around the circumference of the 62, before the attachment nodes 51, 52 are attached to the base 61 and carrier 62. The attachment nodes 51, 52 thus are designed to move, when the carrier 62 moves relative to the base 61, in directions that are parallel to the plane of the image in Figure 6. In order for the sections 41, 42 to be able to flex easily, within the plane of the original sheet material, they can be relatively thin. In alternative embodiments, the sections 41, 42 can be made of wires.

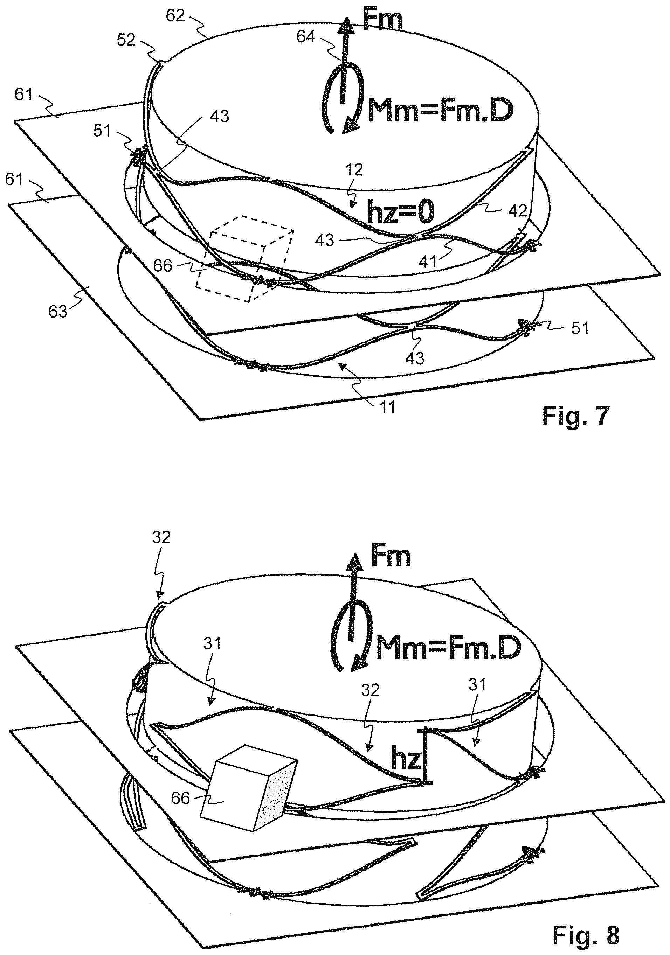

**Figure 7** shows a micro suspension or positioning device with spring arrangements in an extended position. A first (or lower) spring arrangement 11 and second (or upper) spring arrangement 12 are shown. An actuator 66 and its approximate position at which it acts on the carrier 62 is shown symbolically. A resulting actuator force vector **Fm** causes the carrier 62 to be moved along the reference axis 64. A corresponding torque **Mm=Fm*D,** where **D** is the distance from the reference axis to the point at which Fm acts on the carrier 62, induces the carrier 62 to tilt.

Because the arms 31, 32 are connected at the connection nodes 43, the connection nodes 43 of all arms 31, 32 are constrained to be at the same height along the reference axis 64. The height difference hz between connection nodes 43 thus is zero. Relative movement of each pair of attachment nodes is essentially constrained to directions parallel to the reference axis. Consequently, a low value of tilt is attained per unit of movement along the reference axis.

The connection of the connection nodes 43 makes the spring arrangement 1 hyperstatic or statically indeterminate. The compliant springs are deformed by both flexion and by traction of the arms.

In both Figure 7 and Figure 8, displacement in the z-direction is highly exaggerated for the purpose of illustration.

Figure **8** shows what would happen if the connection nodes were free to move, in order to provide a better understanding of the invention. The deformation of the springs is isostatic, or statically determinate. Each arm 31, 32 is free to tilt, and the connection nodes 43 are moved to different heights. For a unit of movement of the carrier 62 in the direction of the reference axis 64, the tilt is significantly larger than for the same movement in the situation in **Figure** 7.

While the invention has been described in present embodiments, it is distinctly understood that the invention is not limited thereto, but may be otherwise variously embodied and practised within the scope of the claims.

## Claims

1. A micro suspension device, comprising a base (61) and a carrier (62) that is designed to move relative to the base (61) along a reference axis (64), **characterised in that**
the carrier (62) is suspended and guided relative to the base (61) by a spring arrangement (1),
• the spring arrangement (1) comprising at least a first spring unit (21) and a second spring unit (22),
• each spring unit (21, 22) comprising a first arm (31) and a second arm (32),
• each arm (31, 32) comprising a first section (41), a second section (42), and a connection node (43),
∘ the first section (41) extending from a first attachment node (51), at which the first section (41) is attached to the base (61), to the connection node (43),
∘ the second section (42) extending from the connection node (43) to a second attachment node (52) at which the second section (42) is attached to the carrier (62),
∘ wherein the first attachment node (51) and the second attachment node (52) lie at the same circumferential position on the base (61) and carrier (62), respectively,
• wherein in each spring unit (21, 22),
∘ the connection node (43) of the first arm (31) is connected to the connection node (43) of the second arm (32),
∘ the first arm (31) and second arm (32) are mirror-symmetric to one another, and
∘ the first arm (31) and second arm (32) are angled relative to one another.

2. The micro suspension device of claim 1, wherein the first arm (31) and second arm (32) are mirror-symmetric to one another, with respect to a mirror plane comprising the connection node (43) and the reference axis (64).

3. The micro suspension device of claim 1 or 2, wherein, when the carrier (62) is moved relative to the base (61) in the direction of the reference axis (64), a distance between the connection nodes (43) of the spring units (21, 22) and the reference axis (64) changes according to this relative movement.

4. The micro suspension device of one of the preceding claims, wherein the arms (31, 32) form sections of a circle centred on the reference axis (64).

5. The micro suspension device of one of claims 1 to 4, wherein the sections (41, 42) of the first arm (31) are parallel to a first side of a triangle, the sections (41, 42) of the second arm (32) are parallel to a second side of the triangle, and a first line connecting the first attachment nodes (51) of the first arm (31) and the second arm (32) and a second line connecting the second attachment nodes (52) of the first arm (31) and the second arm (32) are parallel to a third side of the triangle.

6. The micro suspension device of one of the preceding claims, wherein the first spring unit (21) and the second spring unit (22) have congruent shapes and are arranged in a mirror symmetric arrangement.

7. The micro suspension device of one of the preceding claims, wherein
• the first attachment node (51) of the second arm (32) of the first spring unit (21) coincides with or is identical to the first attachment node (51) of the first arm (31) of the second spring unit (22), and
• the second attachment node (52) of the second arm (32) of the first spring unit (21) coincides with or is identical to the second attachment node (52) of the first arm (31) of the second spring unit (22).

8. The micro suspension device of one of the preceding claims, comprising exactly two spring units (21, 22) which together extend around at least a third of the circumference of the carrier (62), in particular around half the circumference.

9. The micro suspension device of one of the preceding claims, comprising exactly four spring units (21, 22) which together extend around at the entire circumference of the carrier (62).

10. The micro suspension device of one of the preceding claims, wherein there exists a planar configuration of the spring arrangement (1) in which the arms (31, 32) lie in a plane.

11. The micro suspension device of claim 10, wherein the spring arrangement (1) is either manufactured from a single piece of a flat material, in particular metal, by a subtractive process, such as cutting or stamping, or wherein the spring arrangement (1) is manufactured from wires.

12. The micro suspension device of one of the preceding claims, wherein a shape of the spring arrangement (1) in which it has minimal potential energy is not a flat configuration.

13. The micro suspension device of one of the preceding claims, comprising an actuator (66) arranged to exert a force acting on the carrier (62) in a direction parallel to the reference axis (64), wherein this force acts on the carrier (62) at a point that is distanced from the reference axis (64).

14. A spring arrangement (1) for use in a micro suspension device, the spring arrangement (1) being designed to be connected to a base (61) and a carrier (62) for moving the carrier (62) relative to the base (61) along a reference axis (64), and for suspending and guiding the carrier (62) relative to the base (61), **characterised in that**
• the spring arrangement (1) comprises at least a first spring unit (21) and a second spring unit (22),
• each spring unit (21, 22) comprises a first arm (31) and a second arm (32),
• each arm (31, 32) comprises a first section (41), a second section (42), and a connection node (43),
∘ the first section (41) extending from a first attachment node (51), to the connection node (43),
∘ the second section (42) extending from the connection node (43) to a second attachment node (52),
∘ wherein the first attachment node (51) and the second attachment node (52) are adjacent to one another
• wherein in each spring unit (21, 22),
∘ the connection node (43) of the first arm (31) is connected to the connection node (43) of the second arm (32),
∘ the first arm (31) and second arm (32) are mirror-symmetric to one another, and
∘ the connection nodes (43) are distanced from a straight line connecting the attachment nodes (51, 52) of the first arm (31) with the attachment nodes (51, 52) of the second arm (32).

15. The spring arrangement (1) of claim 14, manufactured from a single piece of a flat material, comprising two spring units (2) in a mirror-symmetric arrangement, or comprising four spring units (2) in an arrangement with fourfold rotational symmetry.
